# EUROPEAN PATENT APPLICATION

(11) **EP 4 539 300 A1**
(43) Date of publication of application: **16.04.2025**
(21) Application number: 23203675.6
(22) Date of filing: 13.10.2023
(51) Int. Cl.: H02J 50/30, H02J 50/90, B64U 50/35, H04B 10/80

(54) **ENERGY SENDING METHOD, SENDING DEVICE AND AIRCRAFT, AS WELL AS ENERGY RECEIVING METHOD, RECEIVING DEVICE AND AIR VEHICLE COMPRISING SAME**

(71) Applicant: Airbus S.A.S., 31700 Blagnac (FR)
(72) Inventor: MULTERER, Thomas, 82024 Taufkirchen (DE)
(74) Representative: OTN Airbus SAS

(57) **Abstract**

An energy sending method for sending an energy beam (2) generated by a sender (A) to at least one airborne receiver (B), comprising the steps of targeting at least one energy receiving element (21) of the receiver (B); and sending the energy beam (2) to the energy receiving element (21), a corresponding energy sending device (100) for sending an energy beam (2) to at least one airborne receiver (B), an aircraft (3) comprising an energy sending device (100), an energy receiving method for receiving with an airborne receiver (B) an energy beam (2) generated by a sender (A), comprising the steps of receiving the energy beam (2) with an energy receiving element (21) of the receiver (B); and converting the energy beam (2) for powering at least one energy sink (23) of the receiver (B); a corresponding energy receiving device (200) for powering an airborne receiver (B) by means of an energy beam (2), and an air vehicle (7) comprising an energy receiving device (100), are described.

## Description

### Technical Field

The present disclosure relates to the field of enabling a wireless energy transfer between a sender and an airborne receiver. In particular, the disclosure relates to an energy sending method for sending an energy beam generated by a sender to at least one airborne receiver, an energy sending device for sending an energy beam to at least one airborne receiver, an aircraft comprising an energy sending device, an energy receiving method for receiving with an airborne receiver an energy beam generated by a sender, an energy receiving device for powering an airborne receiver by means of an energy beam, and an air vehicle comprising an energy receiving device.

### Technical Background

Wireless communication between senders and airborne receivers is known and practised for years, if not decades, starting with the lunar lander "Surveyor 7" detecting lasers sent from Kitt Peak National Observatory in Arizona (U.S.A.) and Table Mountain Observatory in Wrightwood, California (U.S.A.), on 20 January 1968. From then on, there are multiple examples of detecting lasers sent from earth with airborne or a spaceborne receivers. Furthermore, it is known to use lasers for communication between aircrafts and/or satellites.

EP 4 113 862 A1 describes a laser communication system for an aircraft comprises a plurality of optical head units, at least one separate laser transmitting unit, at least one laser receiving unit, at least one optical fibre for each optical head unit, at least one optical switching device for selectively coupling at least one of the optical head units and at least one of the at least one separate laser transmitting unit, and a central control unit, wherein the optical head units are connected to the at least one optical switching device through the at least one optical fibre, wherein the optical head units each comprise an optical axis, parallel to which light is emitted or received, wherein the optical head units each comprise at least one optical pointing mechanism for adjusting the respective optical axis, wherein the at least one separate laser transmitting unit comprises a laser and a high power optical amplifier, and wherein the control unit is connected to the at least one optical switching device, the at least one laser transmitting unit, the at least one laser receiving unit and the optical head units and is adapted to control a laser based data communication through coupling at least one of the optical head units, which is in a free line of sight to at least one target outside the aircraft, to the at least one separate laser transmitting unit and to modulate the operation of the at least one separate laser transmitting unit for emitting a signal.

EP 3 685 528 B1 refers to a method for stealth transmission from a satellite or an aircraft intended for a receiver that is located in a geographical zone remote from the satellite or aircraft, comprises repeatedly transmitting data while the geographical zone is automatically scanned with a laser beam. The transmission method is of the free-field optical communication type and can be implemented with a receiver with a simplified design. A transmitter on board the satellite or aircraft encodes the data in a form of an intensity modulation sequence that is intended to be applied to a laser beam; and repeatedly applies the intensity modulation sequence to a laser beam that is produced from the satellite or aircraft and that is directed towards the interior of the geographical zone, at the same time as a direction of said laser beam is varied so that the laser beam automatically scans the entire geographical zone, using a scanning speed and an aperture angle of the laser beam such that any point in the geographical zone is illuminated by the laser beam when scanning for a total illumination time that is greater than a duration of the intensity modulation sequence. The receiver comprises a matrix image sensor that receives the laser beam for a total detection time that is greater than the duration of the intensity modulation sequence, detects the intensity modulation sequence in real time; and decodes the intensity modulation sequence in order to retrieve the data.

Furthermore, air vehicles, in particular unmanned aerial vehicles (UAV), also known as drones, are more and more commonly used. These air vehicles can be electrically powered and can carry certain payloads, such as communication and/or surveillance equipment, e.g., antennas, cameras, sensors or alike. The electrical power is stored in storage means comprising rechargeable batteries and/or hydrogen fuel cells on board of the vehicle. The storage means feed both, the payload, and the propulsion system of the air vehicles including controls and propulsion units, often designed as a rotary wing system comprising multiple rotors, such as four rotors in a quadcopter. Therefore, powering the proportion system and the payload from the same storage can be challenging and often lead to unwanted compromises, in particular in shortening maximal possible flight duration of the air vehicles.

### Summary

It may thus be seen as an object to provide sufficient power to air vehicles, in particular to extend their flight duration and operation times, including operation times of certain payloads carried by the air vehicle. This object is at least partially solved by the subject-matter of the independent claims.

An energy sending method is provided for sending an energy beam generated by a sender to at least one airborne receiver, the method comprising the steps of targeting at least one energy receiving element of the receiver; and sending the energy beam to the energy receiving element.

An energy sending device for sending an energy beam to at least one airborne receiver is provided, wherein in energy sending device is configured to carry out an energy sending method according to at least one of claims 1 to 8 above.

An aircraft comprising an energy sending device is provided.

An energy receiving method for receiving with an airborne receiver an energy beam generated by a sender is provided, the method comprising the steps of receiving the energy beam with an energy receiving element of the receiver; and converting the energy beam for powering at least one energy sink of the receiver.

An energy receiving device for powering an airborne receiver by means of an energy beam is provided, wherein the energy receiving device is configured to carry out an energy receiving method.

An air vehicle comprising an energy receiving device is provided. The air vehicle may be a UAV. In combination, a desired number of senders and receivers may form an energy transfer system.

Thereby, the sender becomes an auxiliary power source for the receiver, in particular the air vehicle. The energy sink of the receiver may be any kind of appliance or apparatus of the receiver, including a power storage module, a propulsion module, and/or any kind of payload of the receiver, such as a data acquisition module. The energy receiving element may be a photovoltaic cell and/or absorber, in particular a laser power converter diode.

Any energy absorbed may be converted in a photovoltaic and/or thermo-electric manner by the receiver in order to then power the energy sink or in order to be stored in the energy sink if the energy sink comprises an energy storage. Before targeting the energy receiving element, the receiver can be acquired by a respective receiver acquisition module of the sender. The energy sending device may be installed in a satellite, ground-based vehicle and/or ground station or may by itself constitute a satellite, vehicle and/or ground station.

Thereby, flight duration and operation times of the receiver, in particular the air vehicle, can be extended. Especially, when the air vehicle hovers or circulates above a certain area, it can be continuously powered by means of the energy beam. This allows for virtually unlimited flight duration and operation time. the design of remotely powered air vehicles can be much different from ones which need to carry fuel or batteries, in that size and/or weight can be reduced. For high altitude platform stations (HAPS) platforms using photovoltaics as a source of energy, the amount of autonomously available power/energy limited to the size of the platform can be increased by the suggested remote powering through energy beams. Hence, the remote powering allows for completely new operational envelopes and applications.

Further developments can be derived from the dependent claims and from the following description.

Many of the features described with reference to the energy sending method and energy receiving method may be implemented as device features, or vice versa. Therefore, the description provided in the context of the energy sending method and energy receiving method applies in an analogous manner also to an energy sending device and an energy receiving device, respectively. In particular, the steps of the methods and mentioned components involved therein may be implemented as functions of the devices and any functions of the devices may be implemented as method steps.

According to an aspect, the energy beam is a laser with a power exceeding 100 W. The Power can exceed 1 kW or even 1 MW. The laser can be a high-power long-range laser, in particular a continuous wave (CW) laser, preferably without any pulse operation. The laser allows for precisely targeting the energy receiving element, while transporting a desired amount of energy to be provided to the receiver.

According to an aspect an energy sending method further comprises the step of aligning an energy sending module of the sender with the energy receiving element. An alignment can include a coarse and a fine alignment. By properly aligning the energy sending module with the energy receiving element, the energy beam can be precisely directed onto the energy receiving element.

According to an aspect, an energy sending method further comprises the step of controlling an orientation of an energy sending element of the sender with respect to the energy receiving element. For example, the energy sending module may be provided with means for adjusting and orientation of the energy sending element, such as servo motors acting in multiple axes, or alike. These means for adjusting the orientation of the energy sending element can be coupled to a respective control system.

According to an aspect, an energy sending method further comprises the step of receiving a tracking beam from the receiver for targeting the at least one energy receiving element. The tracking beam can be picked up by the energy sending module in order to align the energy sending element with the energy receiving element. This helps in precisely and preferably uninterruptedly targeting the energy receiving element with the energy beam.

According to an aspect an energy sending method further comprises the step establishing an optical link between the sender and the receiver for locking the energy beam onto the energy receiving element. The optical link can be established by an additional laser beam, such as the tracking beam, that the receiver sends to the sender. Both, receiver and sender can acknowledge establishment of the optical link. This further helps in precisely and preferably uninterruptedly targeting the energy receiving element with energy beam.

According to an aspect, an energy sending method further comprises the step of sending an initiation signal to the receiver for initiating an energy transfer to the receiver. The initiation signal can be used by the receiver to signal lies that the energy receiving element is ready to receive the energy beam. The readiness can include a previous establishment of the optical link or at least an acknowledgement, that the energy sending element and the energy receiving element are aligned to each other. This helps in establishing the energy transfer between the sender and the receiver in a well-defined and secure manner.

According to an aspect, an energy sending method further comprises the step of receiving a request signal from the receiver requesting an energy transfer to the receiver. The request signal can be used by the sender to initiate the energy transfer to the receiver by means of the energy beam. Therefore, the request signal can include information from the receiver about where, when, how much and/or for which period of time energy is to be received. This helps in efficiently planning and executing the energy transfer from the sender to the receiver.

The energy sending method may further comprise the step of aborting energy transfer upon a targeting failure. Targeting failure may be at hand if the tracking beam is not being received any more by the sender, if the optical link is interrupted, and/or if the receiver recognises that the energy beam is not directed onto the energy receiving element in a desired manner. For example, the sender may then send an abortion signal to the receiver signalling that the energy transfer is to be aborted, i.e., that the energy beam is to be interrupted. This may help in protecting the receiver and/or other surrounding structures from being damaged by the energy beam.

According to an aspect, the energy receiving method further comprises the step of aligning an energy receiving module of the receiver with the energy beam. Similar to the energy sending module, the energy receiving module may be provided with means for adjusting and orientation of the energy receiving element, such as servo motors acting in multiple axes, or alike. These means for adjusting the orientation of the energy receiving element can be coupled to a respective control system. This helps in bringing the energy receiving element and the energy sending element into alignment with each other, thus helping in raising efficiency of the energy transfer between the sender and the receiver.

According to an aspect, an energy receiving frequency of the energy receiving element of the energy receiving device is tuned to a frequency of the energy beam. In other words, and absorption and/or transformation spectrum of the energy receiving element may be chosen such that it matches a frequency of frequency range of the energy beam. This helps in further improving efficiency of the energy transfer between the sender and the receiver.

Certain areas of the receiver may be covered by the energy receiving element. For example, if during flight, the receiver is supposed to be receiving an energy beam sent from altitudes below the receiver or even from the ground, a certain area of the side of the receiver facing the ground, or even a significant portion of the lower side of the receiver may be covered by the energy receiving element. Alternatively, or additionally, if during flight, the receiver supposed to be receiving an energy beam sent from altitudes above the receiver or even from space, a certain area of the side of the receiver facing space, or even a significant portion of the upper side of the receiver may be covered by the energy receiving element. This can help in securely and reliably receiving the energy beam.

### Brief Description of the Drawings

The subject matter will hereinafter be described in conjunction with the following drawing figures, wherein like numerals denote like elements, and wherein:
Fig. 1 is a schematic representation of an energy transfer system including senders sending energy beams to an airborne receiver.
Fig. 2 is a schematic representation of steps of a method for sending an energy beam generated by a sender to at least one airborne receiver, and for receiving the energy beam by the receiver.

### Detailed Description of the Drawings

A greater understanding of the described subject matter may be obtained through a review of the illustrations together with a review of the detailed description that follows. The detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements.

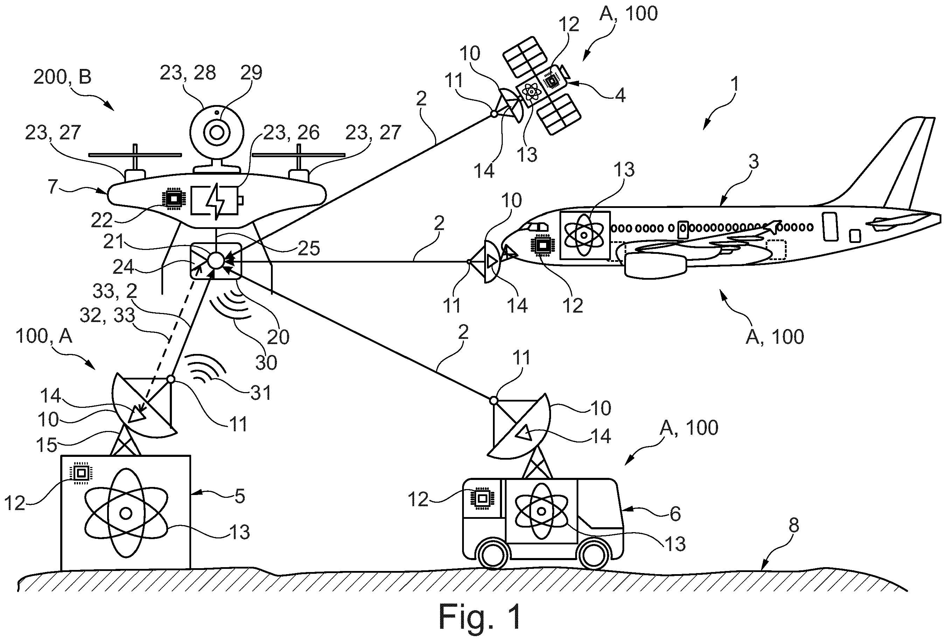

Fig. 1 shows a schematic representation of an energy transfer system 1 including senders A sending energy beams 2 to an airborne receiver B. The senders A can be provided as an aircraft 3, a satellite 4, a ground station 5, and/or a ground vehicle 6. The receiver B can be provided as an air vehicle 7, in particular in form of a UAV. Consequently, the receiver B may be powered by means of the energy beams 2 from the aircraft 3 in the sky, the satellite 4 in space, as well as the ground station 5 and/or the ground vehicle 6 from any desired ground 8.

The senders A each comprise an energy sending module 10 with an energy sending element 11, as well as a control module 12, and an energy source 13. The energy sending module 10 may further comprise a receiver acquisition module 14 and sender adjustment means 15. The receiver acquisition module 14 serves for acquiring and targeting the receiver B. The sender adjustment means 15 serve for aligning the energy sending element 11 with the receiver B. The control module 12 may monitor and/or control the energy sending module 10, the energy sending element 11, the energy source 13, the sender acquisition module 14, the receiver adjustment means 15, and/or any other function or device of the respective sender A, and may therefore be connected thereto in an energy and/or information transferring manner, and may comprise antennas, microphones, cameras, sensors, and/or actuators, along with respective data storage, processing, and/or transmission means, such as microcontrollers, transceivers, data converters, etc. as desired or required for carrying out a respective control function.

The receiver B comprises an energy receiving module 20 with an energy sending element 21, as well as control module 22, and at least one energy sink 23. The energy receiving module 20 may further comprise a sender acquisition module 24 and receiver adjustment means 25. The sender acquisition module 24 serves for acquiring and targeting the sender A. The receiver adjustment means 25 serves for aligning the energy receiving element 21 with the sender A, in particular with the energy sending element 11.

The at least one energy sink 23 may be embodied as a power storage module 26, a propulsion module 27 and/or a data acquisition module 28. The power storage module 26 may comprise any kind of electrical battery, fuel storage, e.g., for hydrogen, or alike, and/or thermal storage, along with respective conversion means, such as transformers, electrolysers, fuel cells, etc. The thermal storage may be part of or connected to a thermo-electrical conversion system designed and configured for converting thermal energy delivered through the energy beam 2 and picked up by the energy receiving element 21 into electrical and/or mechanical power.

The propulsion module 27 may comprise any kind of motors, in particular electrical motors, along with propulsion means, such as rotors, propellers, guide vanes, etc. The data acquisition module 28 may comprise any kind of communication means 29, including antennas, microphones, cameras, sensors, such as infrared sensors, radar equipment, along with respective data storage, processing, and/or transmission means, such as microcontrollers, transceivers, data converters, etc. The control module 22 may monitor and/or control the energy receiving module 20, the energy receiving element 21, the energy sink 23, the sender acquisition module 24, the receiver adjustment means 25, the power storage module 26, the propulsion module 27, the data acquisition module 28, and/or the communication means 29, and may therefore be connected thereto in an energy and/or information transferring manner, and may comprise antennas, microphones, cameras, sensors, and/or actuators, along with respective data storage, processing, and/or transmission means, such as microcontrollers, transceivers, data converters, etc. as desired or required for carrying out a respective control function.

An energy sending device 100 comprises the energy sending module, energy sending element 11, control module 12, energy source 13, receiver acquisition module 14, and/or sender adjustment means 15. The aircraft 3, satellite ground station 5, and/or ground vehicle 6 equipped with the energy sending device 100 can serve as the sender A. An energy receiving device 200 comprises the energy receiving module 20, energy receiving element 21, control module 22, energy sink 23, sender acquisition module 24, receiver adjustment means 25, power storage module 26, propulsion module 27, data acquisition module 28, and/or communication means 29. The air vehicle 7 equipped with the energy receiving device 200 can serve as the receiver B. The energy transfer system 1 can comprise any desired and/or required number of senders A and receivers B with any desired and/or required number of energy sending devices 100 and energy receiving devices 200, respectively.

In operation, the receiver B may send a request signal 30 to the sender A requesting an energy transfer in form of the energy beam 2 to the receiver B. When the sender A is ready to send the energy beam 2 to the receiver B, the sender A may send an initiation signal 31 to the receiver B. For properly targeting the energies receiving element 21 with the energy beam 2, the receiver B may send a tracking beam 32 to the sender B. The tracking beam 32 can be a laser beam, for example, which may have different properties compared to the energy beam 2. With the help of the tracking beam 32, an optical link 33 can be established between the sender A and the receiver B. Alternatively, or additionally, the optical link 33 may be part of the energy beam 2, such that any kind of data or information are transferred from the sender A to the receiver B via the energy beam 2.

The request signal 30, initiation signal 31, tracking beam 32, and/or optical link 33 can be generated, managed, and/or handled by the receiver acquisition module 14 and the sender acquisition module 24, respectively. Therefore, the receiver acquisition module 14 and the sender acquisition module 24 may comprise and/or be connected to any kind of communication or transmission device, such as the communication means 29, including antennas, microphones, cameras, sensors, such as infrared sensors, radar equipment, along with respective data storage, processing, and/or transmission means, such as microcontrollers, transceivers, data converters, etc. In particular for generating the tracking beam 32 and establishing the optical link 33, the receiver acquisition module 14 and the sender acquisition module 24 may further comprise any kind of laser generators and/or detectors, including respective optics and lenses, and may be connected to the energy sending element 11 and/or the energy receiving element 21, respectively in a data and/or energy transmitting manner.

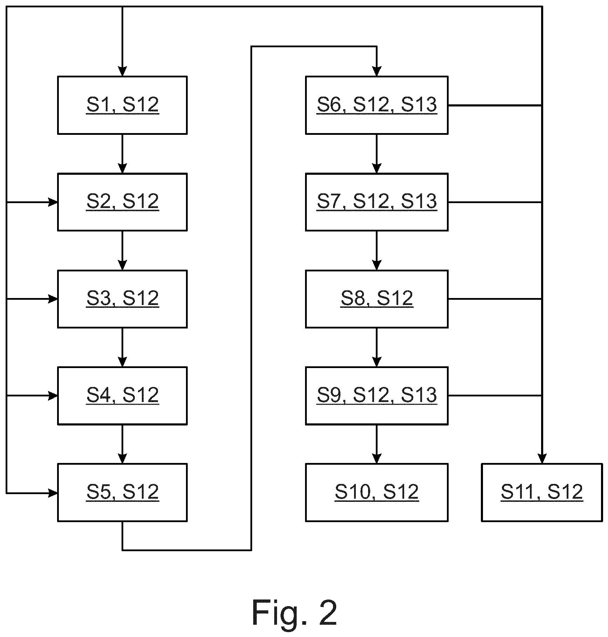

Fig. 2 shows a schematic representation of steps of a method carried out by the energy transfer system 1 for sending an energy beam 2 generated by a sender A to at least one airborne receiver B, and for receiving the energy beam 2 by the receiver B. In a requesting step S1, the receiver B may send the request signal 30 to the sender A. In an acknowledging step S2, the sender A may acknowledge receipt of the request, possibly by sending the initiation signal 31. In a step S3, the receiver B may provide the tracking beam 32 to be picked up by the sender A. As soon as the sender A has picked up the tracking beam 32, in a step S4, the optical link 33 may be established between the sender A and the receiver B. In a step S5, the sender A and/or the receiver B may signalise that the energy sending element 11 and the energy receiving element 21 are properly aligned such that the energy beam 2 can be directed onto the energy receiving element 21. For signalising readiness and/or proper targeting of the energy receiving element 21, respective request signals 30 and/or initiation signals 31 may be used again. In a step S6, mutual readiness can then be confirmed, again possibly by using respective request signals 30 and/or initiation signals 31.

Then, in a step S7, the energy transfer from the sender A to the receiver B can be started. In a step S8, energy transfer can be paused. In a step S9, energy transfer can be resumed. In a step S10, energy transfer can be stopped. Alternatively, or additionally, in a step 11, energy transfer can be aborted. As the energy transfer is being started in step S7 after mutually acknowledged readiness in step S6, it may be aborted after any of the steps S1 to S5 for requesting, acknowledging, tracking, linking, and confirming, respectively, meaning that the procedure for initiating receipt of the energy beam 2 by the energy receiving element 21 can be intentionally interrupted, possibly due to targeting issues or in the event that other tasks have to be fulfilled by the sender A and/or the receiver B that have a higher priority than the energy transfer.

In particular after mutually confirming readiness in step S6, starting, pausing, and/or resuming the energy transfer in steps S7 to S9, respectively, may be aborted in step 11, again especially if targeting issues occur or in the event that other tasks have to be fulfilled by the sender A and/or the receiver B that have a higher priority than the energy transfer, thus interrupting sending and/or receiving the energy beam 2, or weakening the energy beam 2 in such a way that it can merely serve for data transfer purposes. Any interruption may also cause the energy transfer system to return to the steps S1 to S5 for requesting, acknowledging, tracking, linking, and signalising readiness, respectively, in order to then confirm readiness mutually in step S6, for again starting, pausing, and/or resuming the energy transfer in steps S7 to S9, respectively, depending on the state of the procedure to which it is being returned after the abortion and/or interruption. Only when a desired and/or requested amount of energy has been received by the receiver B, the transfer is intentionally stopped in step S10, as being successful.

Any of the steps S1 to S11 can involve a step S12 of targeting the receiver B with the sender A. The sender A can target the receiver B by controlling and orientation the energy sending module 10 such that the energy sending element 11 is directed at the energy receiving element 21. At the latest, the targeting S12 should start after receiving the request signal 30 in step S1, for example along with acknowledging the request in step S2. The targeting S12 should then be upheld over the entire procedure during sending the tracking beam 32 in step 3, establishing the optical link 33 in step S4, signalising readiness in step S5, starting the energy transfer in S7, pausing the energy transfer in S8, and resuming the energy transfer S9 until stopping the energy transfer in step S10, such that until then, the energy beam 2 can be safely received by the energy receiving element 21. In particular the steps S6, S7, and S9 should additionally involve sending the energy beam 2 to the energy receiving element 21, that is the energy beam 2 can be generated for confirming readiness in step S6, when starting the energy transfer in step S7, and/or resuming the energy transfer in step S9. When pausing the energy transfer in step S8, stopping energy transfer in S10 and/or aborting any transfer in step S11, sending the energy beam 2 should be interrupted or the energy beam 2 should be at least weakened in such a way that it may essentially merely serve for an information transmission and targeting purposes, such as for establishing the optical link 33.

Deviations from the above-described embodiments are possible within the inventive idea. The receiving element 21 can be any kind of photovoltaics optimised for taking up and converting the energy beam 2, in particular tuned according to the frequency of the energy beam 2, such as a laser frequency. For example, a concentrator cell may be used as the receiving element 21, such as a high efficiency III-V multi-junction solar cell, developed by AZUR SPACE Solar Power GmbH, Germany, offering a range of suitable optoelectronic receivers. Alternatively, or additionally, the receiving module 20 and/or receiving element 21 can be any kind of thermo-electric generator, where a fluid, e.g., water, hydrocarbons, or alike, is heated through the energy beam 2 and the heat is used to generate electricity. This could involve designing the receiving element 21 as a fluid reservoir with a window which is transparent, translucent, or at least allows for heat transmission. The fluid can also be used to cool the receiving element 21 when it works according to photovoltaic principles. As the aircraft 3, an Airbus A330 MRTT can be equipped with the energy sending device 100 in form of a laser powering head.

The sending module 10 and/or the sending element 11 may comprise special optics allowing to power several receivers B in parallel. Remote powering distances in the order of 100 km should be achieved. On receivers A in the form drones or platforms like HAPS, high power densities and small energy beam 2 spot sizes are important because the platforms themselves are small. Probably power densities in the order of 1 kW/cm² can be useful. Thus, the energy beam 2 itself can dangerous/harmful and needs to be well controlled. As the current generation of laser beams available as energy beams 2 is inherently energy-ineffective, probably lower that 10%, a high heat generation rate at the energy sending module 10 is to be expected. This heat may be used in heat-recovery systems, in order to increase the overall system efficiency. One way of recycling the heat may be to use an organic rankine cycle (ORC) process. This allows the use of low exhaust temperatures (<100°C), unlike other heat engines.

### List of Reference Signs

- 1: energy transfer system
- 2: energy beam
- 3: aircraft
- 4: satellite
- 5: ground station
- 6: ground vehicle
- 7: air vehicle
- 8: ground

- 10: energy sending module
- 11: energy sending element
- 12: control module
- 13: energy source
- 14: receiver acquisition module
- 15: sender adjustment means

- 20: energy receiving module
- 21: energy receiving element
- 22: control module
- 23: energy sink
- 24: sender acquisition module
- 25: receiver adjustment means
- 26: power storage module
- 27: propulsion module
- 28: data acquisition module
- 29: communication means
- 30: request signal
- 31: initiation signal
- 32: tracking beam
- 33: optical link

- 100: energy sending device
- 200: energy receiving device

- A: sender
- B: receiver

- S1: requesting energy
- S2: acknowledge request
- S3: sending tracking beam
- S4: establish optical link
- S5: signalising readiness
- S6: confirm readiness
- S7: start transfer
- S8: pause transfer
- S9: resume transfer
- S10: stop transfer
- S11: abort transfer
- S12: targeting receiver
- S13: sending energy

## Claims

1. Energy sending method for sending an energy beam (2) generated by a sender (A) to at least one airborne receiver (B), the method comprising the steps of targeting at least one energy receiving element (21) of the receiver (B); and sending the energy beam (2) to the energy receiving element (21).

2. Energy sending method according to claim 1, wherein the energy beam (2) is a laser with a power exceeding 100 W.

3. Energy sending method according to claim 1 or 2, further comprising the step of aligning an energy sending module (10) of the sender (A) with the energy receiving element (21).

4. Energy sending method according to at least one of claims 1 to 3, further comprising the step of controlling an orientation of an energy sending element (21) of the sender (A) with respect to the energy receiving element (21).

5. Energy sending method according to at least one of claims 1 to 4, further comprising the step of receiving a tracking beam (32) from the receiver (B) for targeting the at least one energy receiving element (21).

6. Energy sending method according to at least one of claims 1 to 5, further comprising the step establishing an optical link (33) between the sender (A) and the receiver (B) for locking the energy beam (2) onto the energy receiving element (21).

7. Energy sending method according to at least one of claims 1 to 6, further comprising the step of sending an initiation signal (31) to the receiver (B) for initiating an energy transfer to the receiver (B).

8. Energy sending method according to at least one of claims 1 to 7, further comprising the step of receiving a request signal (30) from the receiver (B) requesting an energy transfer to the receiver (B).

9. An energy sending device (100) for sending an energy beam (2) to at least one airborne receiver (B), wherein an energy sending device (100) is configured to carry out an energy sending method according to at least one of claims 1 to 8 above.

10. An aircraft (3) comprising an energy sending device (100) according to claim 9.

11. Energy receiving method for receiving with an airborne receiver (B) an energy beam (2) generated by a sender (A), the method comprising the steps of
receiving the energy beam (2) with an energy receiving element (21) of the receiver (B); and
converting the energy beam (2) for powering at least one energy sink (23) of the receiver (B).

12. Energy receiving method according to claim 11, further comprising the step of aligning an energy receiving module (10) of the receiver (B) with the energy beam (2).

13. Energy receiving device (200) for powering an airborne receiver (B) by means of an energy beam (2), wherein the energy receiving device (200) is configured to carry out an energy receiving method according to claim 11 or 12.

14. Energy receiving device (200) according to claim 13, wherein an energy receiving frequency of the energy receiving element (21) is tuned to a frequency of the energy beam (2).

15. An air vehicle (7) comprising an energy receiving device (100) according to claim 14 or 15.
